(19) Europäisches Patentamt
European Patent Office
Office européen des brevets

(11) **EP 1 352 541 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **02706598.6**

(22) Anmeldetag: **17.01.2002**

(51) Int Cl.:
*H04Q 7/38* (2006.01)   *H04B 7/005* (2006.01)

(86) Internationale Anmeldenummer:
**PCT/DE2002/000128**

(87) Internationale Veröffentlichungsnummer:
**WO 2002/058424 (25.07.2002 Gazette 2002/30)**

(54) **VERFAHREN ZUM ZUGRIFF EINER TEILNEHMERSTATION AUF EIN NETZWERK EINES MOBILFUNKSYSTEMS**

METHOD FOR ACCESS OF A USER STATION TO THE NETWORK OF A MOBILE RADIO SYSTEM

PROCEDE D'ACCES D'UN POSTE D'ABONNE A UN RESEAU DE SYSTEME RADIOMOBILE

(84) Benannte Vertragsstaaten:
**AT BE CH CY DE DK ES FI FR GB GR IE IT LI LU MC NL PT SE TR**

(30) Priorität: **17.01.2001 DE 10101955**

(43) Veröffentlichungstag der Anmeldung:
**15.10.2003 Patentblatt 2003/42**

(73) Patentinhaber: **SIEMENS AKTIENGESELLSCHAFT 80333 München (DE)**

(72) Erfinder:
• **BAHRENBURG, Stefan 28832 Achim (DE)**
• **De BENEDITTIS, Rosella I-20137 Milano (IT)**
• **HOEYNCK, Andreas 16540 Hohen Neuendorf (DE)**

(56) Entgegenhaltungen:
WO-A-00/22873      WO-A-00/56096
WO-A-01/97411

• "3G TR 25.928 V1.1.0; 3rd Generation Partnership Project (3GPP); Technical Specification Group (TSG); Radio Access Network (RAN); 1.28 Mcps functionality for UTRA TDD Physical Layer" 3RD GENERATION PARTNERSHIP PROJECT (3GPP), Juli 2000 (2000-07), XP002170077
• "3G TR 25.928 V4.0.1; 3rd Generation Partnership Project (3GPP); Technical Specification Group (TSG); Radio Access Network (RAN); 1.28Mcps functionality for UTRA TDD Physical Layer" 3RD GENERATION PARTNERSHIP PROJECT (3GPP), März 2001 (2001-03), XP002202304

**Beschreibung**

Die Erfindung betrifft ein Verfahren zum Zugriff einer Teilnehmerstation auf ein Netzwerk eines Mobilfunksystems.

In Funk-Kommunikationssystemen werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen.

Für die dritte Mobilfunkgeneration sind zwei Modi vorgesehen, wobei ein Modus einen FDD-Betrieb (frequency division duplex) und der andere Modus einen TDD-Betrieb (time division duplex) bezeichnet. Bei dem TDD-Modus wird darüber hinaus nach einem so genannten High Chiprate-Modus (HCR) mit 3,84 Mcps und einem so genannten Low Chiprate-Modus (LCR) mit 1,28 Mcps unterschieden. Ein weiteres, dem LCR-TDD-Modus sehr ähnliches Mobilfunksystem stellt das für den chinesischen Markt entwickelte, so genannte TD-SCDMA-System (Time Division Synchronized Code Division Multiple Access) dar.

Aus dem Dokument 3G TR 25.928 V1.1.0, 3rd Generation Partnership Project (3GPP), Technical Specification Group (TSG), Radio Access Network (RAN), 1.28 Mcps functionality for UTRA TDD Physical Layer, Juli 2000 (2000-07), XP002170077, insbesondere dem Kapitel 10.6.2.3 "Random access procedure" ist eine Zugriffsprozedur einer Teilnehmerstation UE auf ein Netzwerk bekannt.

Aus der nachveröffentlichten WO 01/97411 A1 ist ein zweistufiges Zugriffsverfahren für ein so genanntes NB-TDD-System (Narrow Band Time Division Duplexing) bekannt, bei dem von einer Teilnehmerstation zunächst ein Synchronisationscode in einem Subrahmen zu dem Netzwerk gesendet wird, der Empfang dieses Codes von dem Netzwerk in einem FPACH-Kanal bestätigt wird, und die Teilnehmerstation anschließend in einem P-RACH-Kanal einen Zugriffsfunkblock zu dem Netzwerk senden kann. Dem FPACH-Kanal können dabei ein oder mehrere P-RACH-Kanäle zugeordnet sein.

Aufgabe der Erfindung ist es, in dem beschriebenen Mobilfunksystem ein flexibles und effizientes Verfahren für den Zugriff von Teilnehmerstationen auf das Netzwerk des Mobilfunksystems zu realisieren. Diese Aufgabe wird durch die Merkmale des Patentanspruchs 1 gelöst.

Das erfindungsgemäße Zugriffs-Verfahren stellt ein zweistufiges Verfahren dar. In einem ersten Schritt wird dabei der Teilnehmerstation ermöglicht, eine Synchronisation in Aufwärtsrichtung zu erlangen und ihren Sendeleistungspegel durch Austausch von Signaturen und Bursts mit dem Netzwerk einzustellen. In einem zweiten Schritt sendet die Teilnehmerstation die Zugriffs-Nachricht auf dem entsprechenden physikalischen Zugriffskanal, so dass eine Kollision auf diesem Kanal vorteilhaft vermieden werden kann.

Aufgrund von Nutzlasterfordernissen für den Zugriffskanal kann eine Zugriffs-Nachricht insbesondere einen bis vier Subrahmen lang sein, und der physikalische Zugriffskanal insbesondere die Spreizfaktoren 4, 8 und 16 aufweisen. Um eine wirkungsvolle Nutzung beispielsweise der Resourcen des schnellen physikalischen Zugriffskanals zu ermöglichen, kann diesem mehr als ein physikalischer Zugriffskanal zugeordnet sein. Der Zugriff auf diese physikalischen Zugriffskanal kann dabei beispielsweise nur auf speziellen Subrahmen auf dem schnellen physikalischen Zugriffskanal gewährt werden.

Ausführungsbeispiele der Erfindung werden anhand der beiliegenden Zeichnungen näher erläutert.

Dabei zeigen

FIG 1    ein Blockschaltbild eines Funk-Kommunikationssystems,

FIG 2    eine schematische Darstellung der Struktur einer TDD-LCR-Funkschnittstelle,

FIG 3    ein Beispiel mit einem PRACH,

FIG 4    ein Beispiel mit zwei PRACHs,

FIG 5    ein Beispiel mit vier PRACHs, und.

FIG 6    ein weiteres Beispiel mit zwei PRACHs.

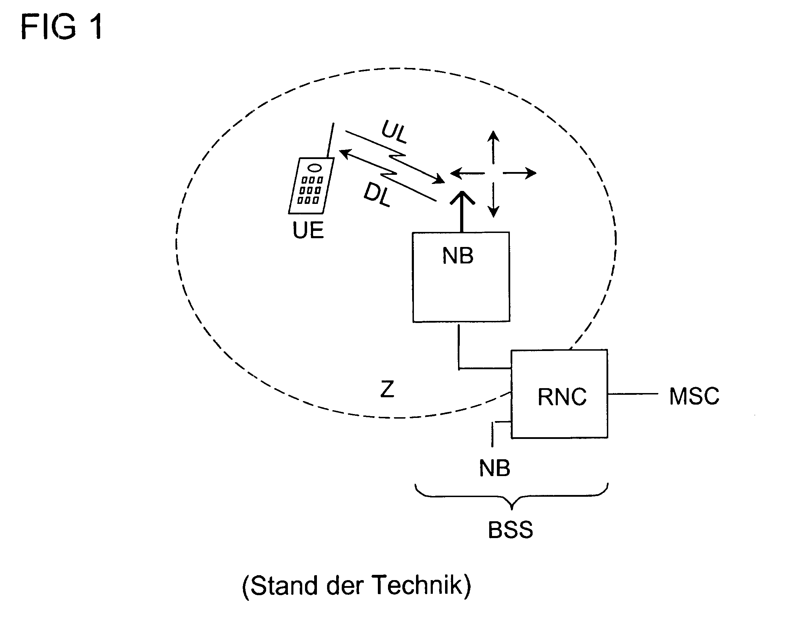

Die FIG 1 zeigt einen Ausschnitt aus einem Mobilfunksystem. Ein Mobilfunksystem besteht aus einer Vielzahl von Mobilvermittlungsstellen MSC, die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC verbundenen Basisstationssystemen BSS (Base Station Subsystem). Ein Basisstationssystem BSS weist wiederum zumindest eine Einrichtung RNC (RNC - Radio Network Controller) zum Zuweisen von funktechnischen Ressourcen sowie zumindest eine jeweils damit verbundene Basisstation NB (Node B) auf. Eine Basisstation NB kann über eine Funkschnittstelle Verbindungen zu Teilnehmerstationen UE (User Equipment), wie z.B. Mobilstationen oder anderweitige mobile und stationäre Endgeräte, aufbauen. Durch jede Basisstation NB wird zumindest eine Funkzelle Z gebildet. Die Größe der Funkzelle wird in der Regel durch die Reichweite eines allgemeinen Signalisierungskanals (BCH - Broadcast Channel), der von der Basisstation NB mit einer vorgegebenen Sendeleistung gesendet wird, bestimmt.

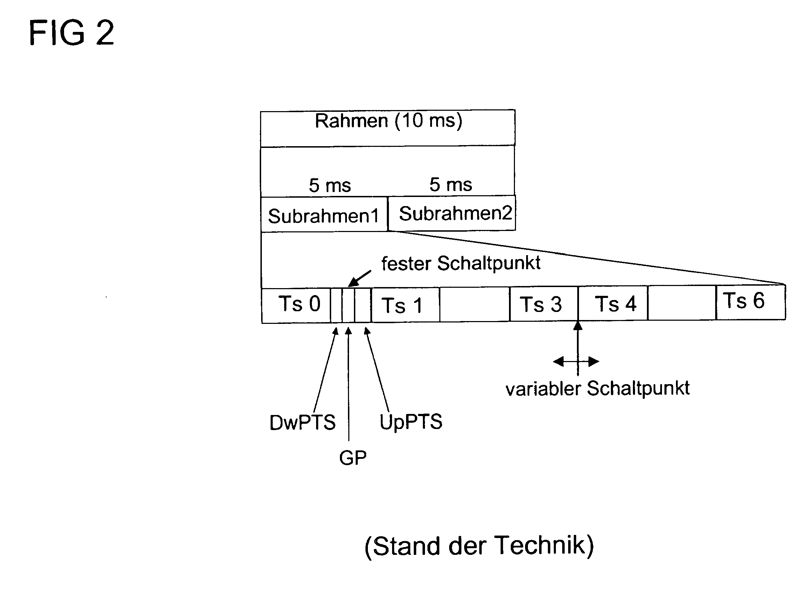

Die FIG 2 zeigt die Rahmenstruktur für den LCR-TDD-Modus mit 1,28 Mcps. Diese Rahmenstruktur unterscheidet sich von der Rahmenstruktur des HCR-TDD-Modus mit 3,84 Mcps, um Prozeduren der physikalischen Schicht zu ermöglichen, die in dem HCR-TDD-Modus nicht genutzt werden.

Ein Rahmen mit einer Länge von 10 ms - und damit Kompatibilität zu den anderen beschriebenen FDD- und TDD-HCR-Modi des UMTS-Systems - wird in zwei Subrahmen mit einer jeweiligen Länge von 5 ms aufgeteilt. In der normalen Betriebsweise weist jeder Subrahmen zwei Umschaltpunkte (Switching Point) zum Umschalten der übertragungsrichtung auf. Der erste Umschaltpunkt ist fest in dem Subrahmen angeordnet und folgt nach dem ersten Zeitschlitz Ts 0, in dem unter anderem der in Abwärtsrichtung gerichtete P-CCPCH (Primary Common Control Physical Channel) mit dem BCH (Broadcast Channel) angeordnet ist. Der zweite Umschaltpunkt kann beispielsweise abhängig von der aktuellen Verkehrslast in der jeweiligen Übertragungsrichtung flexibel innerhalb der übrigen Zeitschlitze Ts 1 bis Ts 6 angeordnet werden.

Der DwPTS (Downlink Pilot Timeslot) trägt den DwPCH (Downlink Pilot Channel) und dient zur Synchronisierung der Teilnehmerstation UE in Abwärtsrichtung. Die besonders lange Schutzzeit GP (Guard Period) ist zur Unterstützung großer Funkzellen erforderlich. Der UpPTS (Uplink Pilot Timeslot) trägt den UpPCH und dient dem ersten Schritt der Zugriffsprozedur der Teilnehmerstationen auf das Netzwerk. In dem UpPTS gibt es acht mögliche SYNC-UL-Codes, aus denen die einen erstmaligen Zugriff oder eine Wiederherstellung der Synchronisation in Aufwärtsrichtung durchführende Teilnehmerstation einen Code auswählt. Der UpPCH stellt den einzigen Kanal in Aufwärtsrichtung dar, der nicht in hohem Maße an der Basisstation synchronisiert ist.

Das nachfolgend beschriebene physikalische Zugriffsverfahren (Random Access) wird jedesmal dann durchgeführt, wenn eine höhere Schicht eine Übertragung einer Nachricht auf dem RACH (Random Access Channel) anfordert. Das auf der physikalischen Ebene (Schicht 1) durchgeführte Zugriffsverfahren wird durch Dienstelemente (primitives) vom RRC (Radio Resource Control) und vom MAC (Medium Access Control) in den höheren Schichten gesteuert.

Zunächst wird die Vorbereitung des zufälligen Zugriffes beispielhaft beschrieben:

Wenn sich die Teilnehmerstation UE im so genannten Idle-Modus befindet, behält sie die Downlink-Synchronisation und liest die von der Basisstationen in dem jeweiligen BCH ausgesendeten Rundfunk- bzw. Systeminformationen der versorgenden und gegebenenfalls benachbarten Funkzellen. Aus dem benutzten SYNC_DL-Code im DwPCH erhält die Teilnehmerstation UE den Codesatz von 8 SYNC_UL-Codes (Signaturen), die dem UpPCH für den zufälligen Zugriff zugewiesen sind. Es gibt insgesamt 256 verschiedene SYNC_UL-Sequenzen, wobei die SYNC_UL-Sequenznummer geteilt durch acht die SYNC_DL-Sequenznummer ergibt. Die Beschreibung, wie beispielsweise Codes, Spreizfaktor, Mittambeln, Zeitschlitze, des PRACH-Kanals (Physical Random Access Channel), FPACH-Kanals (Fast Physical Access Channel) und S-CCPCH-Kanals (Secondary Common Control Physical Channel), der den logischen Kanal FACH (Forward Access Channel) trägt, wird auf dem BCH rundgesendet. Die Teilnehmerstation UE empfängt diese BCH-Informationen und wertet sie aus. Hierdurch weiß die Teilnehmerstation UE bei der Aussendung einer SYNC_UL-Sequenz, welche FPACH-, PRACH- und CCPCH-Resourcen für den Zugriff genutzt werden. Das beschriebene physikalische Zugriffs-Verfahren wird bei Anforderung eines so genannten PHY-Data-REQ-Dienstelements (Physical Data Request) von der MAC-Subschicht eingeleitet.

Bevor jedoch das Zugriffs-Verfahren eingeleitet werden kann, soll die physikalische Schicht 1 die folgenden Informationen durch eine so genannte CPHY-TrCH-Config-REQ-Nachricht (Common Physical Transport Channel Configuration Request) von der RRC-Schicht empfangen:

- Die jeweilige Zuordnung zwischen welchen Signaturen und welchen FPACHs; welchen FPACHs und welchen PRACHs; welchen PRACHs und welchen CCPCHs; einschließlich der Parameterwerte für jeden aufgeführten physikalischen Kanal.
- Die Länge $L_i$ einer dem $FPACH_i$ (FPACH Nummer i) zugeordneten RACH-Nachricht bzw. -Transportblocks kann entweder auf 1, 2 oder 4 Subrahmen entsprechend einer zeitlichen Länge von entweder 5 ms, 10 ms oder 20 ms konfiguriert werden. Hierzu sei angemerkt, dass $NA_{RACHi}$PRACHs $FPACH_i$ zugeordnet sein können. Die höchstzulässige $N_{RACHi}$, d.h. die maximale Anzahl der dem i-ten FPACH zugeordneten PRACHs. ist gleich der Länge Li.
- Die verfügbaren UpPCH-Subkanäle für jede so genannte Zugriffs-Dienste-Klasse (Access Service Class - ASC). Hierzu sei angemerkt, dass ein UpPCH-Subkanal durch eine Signatur bzw. eine Teilmenge von Signaturen und Subrahmennummern definiert wird.

- Den Satz von Transportformatparametern für die PRACH-Nachricht.
- Die maximale Anzahl "M" von wiederholten Aussendungen von Signaturen bzw. Aussendungen in dem UpPCH.
- Die maximale Anzahl "WT" von Subrahmen, in denen auf eine Netzbestätigung auf eine gesandte Signatur gewartet wird. Diese Anzahl kann zwischen 1 und 4 liegen, wobei der durch Schicht 1 unterstützte Höchstwert 4 Subrahmen beträgt.
- Die Anfangs-Sendeleistung der Signatur (Signature Initial Power) und die Empfangsleistung an der Basisstation NB.
- Die Schrittgröße $\Delta$P (Stepsize UpPCH) (in dB), um die der Leistungspegel vor jeder wiederholten Übertragung des SYNC-UL-Bursts erhöht wird.

Zu den vorangehenden Parametern sei angemerkt, dass sie gegebenenfalls vor Einleitung eines jeweiligen physikalischen Zugriffs-Verfahrens von höheren Schichten aus aktualisiert werden können.

Bei jeder Einleitung des physikalischen Zugriffs-Verfahrens soll die Schicht 1 weiterhin die folgenden Informationen von den höheren Schichten (MAC) empfangen:

- Das für die spezifische PRACH-Nachricht zu verwendende Transportformat.
- Die Access Service Class (ASC) für das spezifische Zugriffs-Verfahren mit einer Zeitgabe (timing) und einer Anzeige des Leistungspegels.
- Die zu übertragenden Daten (Transportblockmenge - Transport Block Set).

Das physikalische Zugriffs-Verfahren wird anschließend auf Seiten der Teilnehmerstation UE und des Netzwerkes wie nachfolgend beschrieben durchgeführt.

Auf Seite der Teilnehmerstation:

- Setzen des Zählers für die wiederholte Übertragung der Signatur auf M.
- Setzen der Sendeleistung der Signatur, d.h. der gewünschten UpPCH-Empfangsleistung an der Basisstation NB, auf die signalisierte Anfangs-Sendeleistung der Signatur (Signature Initial Power).
- zufälliges Auswählen des UpPCH-Subkanals aus den für die gegebene Access Service Class verfügbaren Subkanälen. Die Zufallsfunktion ist dabei vorteilhaft dergestalt, dass jede der zulässigen Wahlmöglichkeiten mit einer gleichen Wahrscheinlichkeit gewählt wird.
- Übertragen einer Signatur unter Verwendung des ausgewählten UpPCH-Subkanals mit der gesetzten Sendeleistung der Signatur.
- Nach dem Senden der Signatur Abhören des entsprechenden FPACH-Kanals während der nachfolgenden WT Subrahmen zum Empfangen der Bestätigung des Netzwerkes. Die Teilnehmerstation UE liest dabei den mit dem ausgewählten UpPCH verbundenen $FPACH_i$ nur in den Subrahmen, die der folgenden Beziehung entsprechen:

$$(SFN' \bmod L) = n_{RACHi} \text{ mit } n_{RACHi} = 0, ..., \_N_{RACHi} - 1$$

Alternativ hierzu kann auch gelten:

$$(SFN' \bmod N_{RACHi)} = n_{RACHi} \text{ mit } n_{RACHi} = 0, ..., N_{RACHi} - 1$$

SFN' ist die beim Zählen der Unterrahmen erhaltene Subrahmennummer. Zu Beginn des Rahmens mit Systemrahmennummer SFN=0 wird die Subrahmennummer zu Null gesetzt.

- Wenn innerhalb der vorgegebenen Zeit keine gültige Antwort empfangen wird, wird der Zähler für die wiederholte Übertragung der Signatur um 1 erniedrigt. Wenn der Zähler dann immer noch größer als 0 ist, wird die gewünschte UpPCH-Empfangsleistung um die Schrittgröße UpPCH erhöht und/oder der Schritt 3 wiederholt. Für den Fall eines erfolglosen Zugriffs wird dieses an die MAC-Subschicht berichtet.
- Bei einem Empfang einer gültigen Antwort in der vorgegebenen Zeit werden folgende Schritte durchgeführt:

    a) Setzen der Zeitgabe und der Sendeleistungspegelwerte entsprechend den vom Netzwerk im $FPACH_i$ empfangenen Angaben.
    b) Senden der Zugriffs-Nachricht (RACH message) auf dem entsprechenden PRACH in dem Subrahmen, der zwei Subrahmen nach dem die Bestätigung der Signatur führenden Subrahmen folgt. Alternativ für die nachfolgenden zwei Subrahmen wird für den Fall, dass die Subrahmennummer zwei Rahmen nach der Bestätigung ungeradzahlig ist, der RACH drei Subrahmen nach dem empfang der Bestätigung ausgesandt. Der entsprechende PRACH ist der dem FPACH$_i$ zugeordnete n$_{RACHi}$-te PRACH, wenn die folgende Gleichung erfüllt ist:

$$(\text{SFN'} \bmod L) = n_{RACHi}$$

Alternative hierzu kann auch gelten:

$$(\text{SFN'} \bmod N_{RACHi}) = n_{RACHi}$$

Hier ist SFN' die Subrahmennummer der Ankunft bzw. des Empfangs der Bestätigung seitens des Netzwerkes.

Weder auf dem UpPCH noch auf dem PRACH sollte dabei der Sendeleistungspegel den vom Netzwerk signalisierten Wert überschreiten.

Auf Seite des Netzwerkes:

- Die Basisstation NB überträgt den dem übertragenen UpPCH zugeordneten FPACH$_i$ nur in den Subrahmen, die die folgenden Beziehung erfüllen:

$$(\text{SFN'} \bmod L) = n_{RACHi} \text{ mit } n_{RACHi} = 0, \ldots, N_{RACHi} - 1,$$

- Die Basisstation NB bestätigt keine UpPCH, die vor mehr als WT-Subrahmen übertragen wurden.

Bei Empfang einer gültigen Signatur:

- Messen der Zeitabweichung im Verhältnis zu der Bezugszeit T$_{ref}$ des empfangenen ersten zeitlichen Pfades in dem UpPCH, und Bestätigen der empfangenen Signatur durch Übertragen des FPACH-Bursts auf dem entsprechenden FPACH.

Bei Empfang des RACH:

- Die Basisstation NB verwirft einen nicht bestätigten empfangenen PRACH.
- Für den Fall, dass ein bestätigter RACH nicht erfolgreich empfangen wurde, signalisiert die Basisstation NB dieses dem RNC (Radio Network Controller).
- Für den Fall, dass ein RACH erfolgreich empfangen wird, leitet die Basisstation NB den Inhalt der RACH-Nachricht an den RNC weiter. Der RNC entscheidet anschließend über die Signalisierung eines ACK (Acknowledge), eines NACK (Negative Acknowledge) oder eine Bearbeitung der Nachricht.

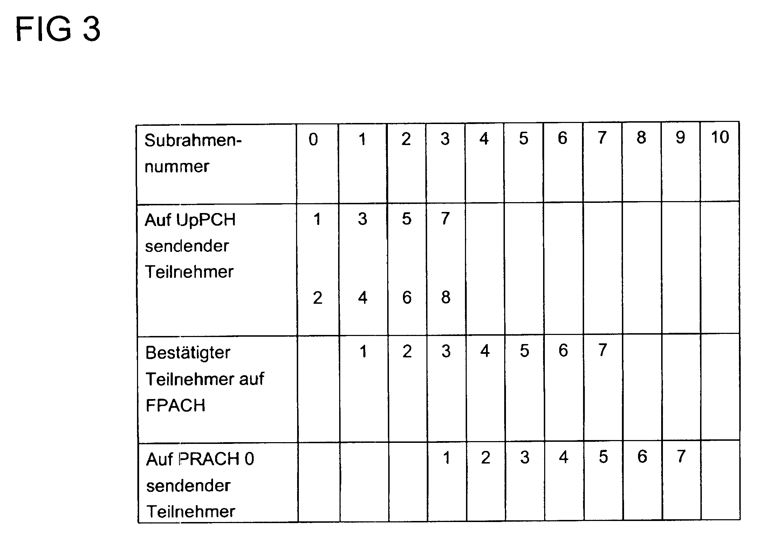

Beispiele des Zugriffs-Verfahrens sind in den FIG 3 bis 6 dargestellt.

FIG 3 zeigt beispielhaft den Fall eines RACH-Burst bzw. eines PRACH, mit WT=4, L=1 und Spreizfaktor SF4 für den PRACH. Aus der Tabelle ist dabei ersichtlich, dass der RACH des Teilnehmer 8 nicht gewährt wird, da mehr als 5 Subrahmen seit dem UpPCH vergangen wären.

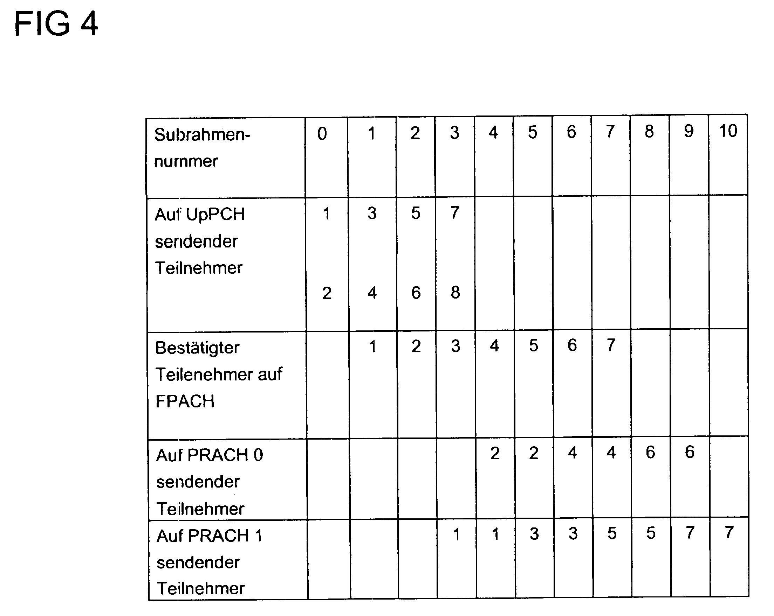

FIG 4 zeigt beispielhaft den Fall von zwei RACH-Burst bzw. zwei PRACHs, mit WT=4, L=2 und SF8 für den PRACH. Aus der Tabelle ist dabei ersichtlich, dass der RACH des Teilnehmer 8 nicht gewährt wird, da mehr als 5 Subrahmen seit dem UpPCH vergangen wären.

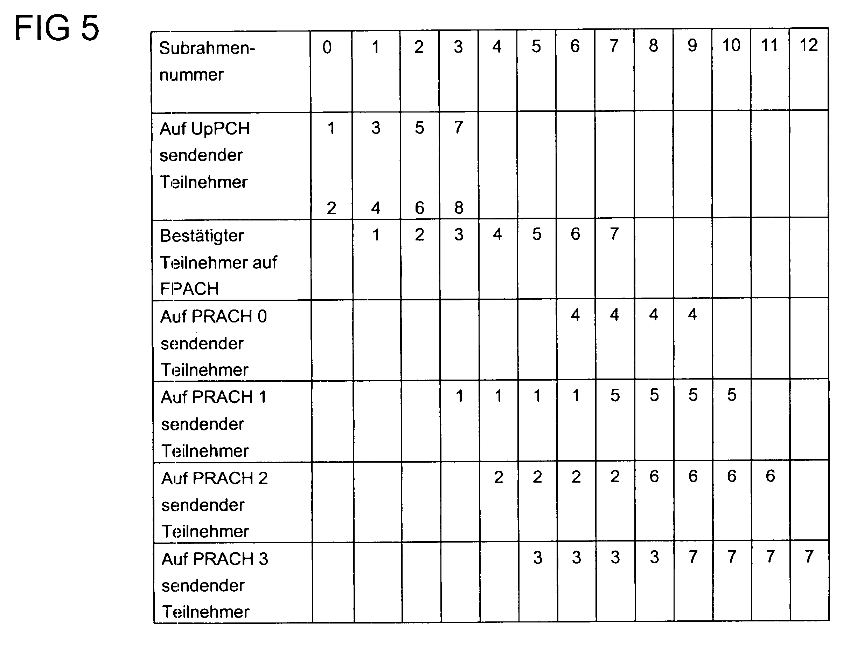

FIG 5 zeigt beispielhaft den Fall von vier RACH-Bursts bzw. vier PRACHs, mit WT=4, L=4 und Spreizfaktor SF16 für den PRACH. Aus der Tabelle ist ersichtlich, dass der RACH des Teilnehmer 8 nicht gewährt wird, da mehr als 5 Subrahmen seit dem UpPCH vergangen wären.

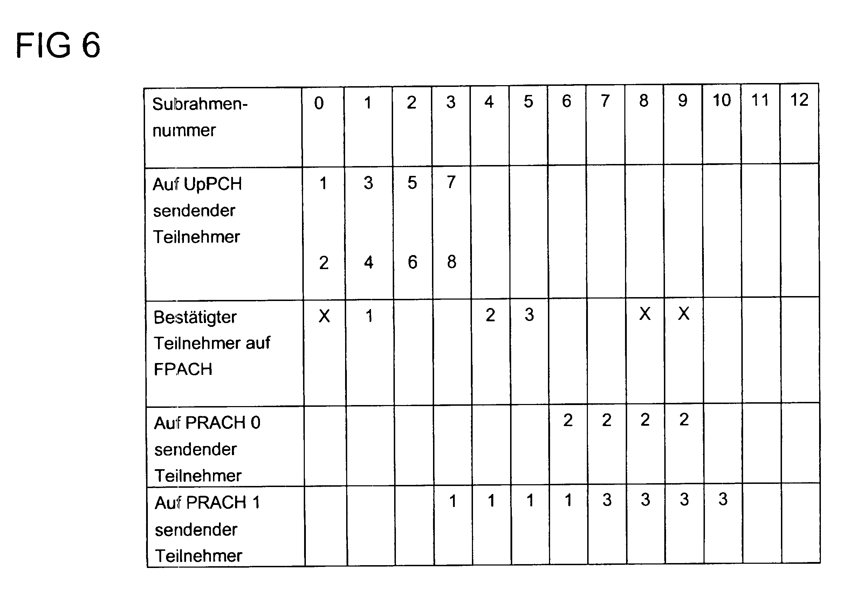

FIG 6 zeigt schließlich beispielhaft den Fall von vier RACH-Bursts bzw. zwei PRACHs, mit WT=4, L=4 und SF16 für den PRACH. Aus der Tabelle ist ersichtlich, dass der FPACH nur in den Subrahmen 0, 1, 4, 5, 8, 9,... genutzt wird, da diese den genutzten RACH-Resourcen entsprechen. Der FPACH im Subrahmen 0 wird dahingegen nicht benutzt, da ihm kein UpPCH vorangeht. In gleicher Weise wird der FPACH in den Subrahmen 8, 9 nicht genutzt, da diesen in den letzten 4 Subrahmen kein UpPCH vorangeht. Die Teilnehmer 4, 5, 6, 7 werden nicht gewährt, da sie keinem Fall zu einem RACH führen würden. In diesen Fällen käme eine Gewährung zu spät Der Teilnehmer 8 wird nicht gewährt, da seit dem UpPCH mehr als 4 Subrahmen vergangen sind.

Neben der beschriebenen normalen Zugriffsprozedur kann es bei einem gleichzeitigen Zugriff durch mehrere Teilnehmerstationen zu Kollisionen kommen. In Fällen, in denen eine Kollision sehr wahrscheinlich ist oder beispielsweise die Ausbreitungsumgebung schlechte Bedingungen bietet, kann die Basisstation NB in der Regel entweder den FPACH nicht übertragen oder den SYNC_UL nicht empfangen. In diesem Fall kann die Teilnehmerstation UE keinerlei Antwort von der Basisstation NB erhalten. Die Teilnehmerstation UE wird daher ihre Sendezeit und ihren Sendeleistungspegel auf Grundlage einer neuen Messung einstellen, und einen SYNC_UL nach einer zufällig ausgewählten Verzögerung wiederholt senden. Hierbei wird der SYNC_UL-Burst bei jeder Wiederholung beliebig von der Teilnehmerstation UE ausgewählt.

Aufgrund des erfindungsgemäßen zweistufigen Ansatzes tritt eine Kollision mit der größten Wahrscheinlichkeit auf dem UpPCH auf. Die RACH-Resourcen sind dahingegen praktisch kollisionsfrei. Mit diesem zweistufigen Ansatz wird vorteilhaft ermöglicht, dass die RACH-Resourcen gemeinsam mit herkömmlichem Verkehr in den gleichen Zeitschlitzen frü die Aufwärtsrichtung behandelt werden können.

### Patentansprüche

1. Verfahren zum Zugriff einer Teilnehmerstation (UE) auf ein Netzwerk eines Mobilfunksystems, bei dem die Teilnehmerstation (UE)

   - in einem ersten Schritt von einer Basisstation (NB) des Netzwerkes einen Synchronisationscode zur Synchronisation empfängt, wobei aus dem verwendeten Synchronisationscode eine Anzahl von Signaturen ableitbar ist, welche einem physikalischen Kanal in Aufwärtsrichtung (UpPCH) für einen zufälligen Zugriff zugewiesen sind und welche jeweils einen Subkanal des physikalischen Kanals in Aufwärtsrichtung (UpPCH) definieren,
   - zufallsgesteuert einen Subkanal des physikalischen Kanals in Aufwärtsrichtung (UpPCH) auswählt,
   - in dem ausgewählten Subkanal des physikalischen Kanals in Aufwärtsrichtung (UpPCH) eine Signatur zu der Basisstation (NB) mit einer Anfangs-Sendeleistung überträgt,
   - einen dem physikalischen Kanal in Aufwärtsrichtung (UpPCH) zugeordneten schnellen physikalischen Zugriffskanal (FPACH) in Abwärtsrichtung für eine Anzahl von Subrahmen abhört, um eine Bestätigung des Netzwerkes zu empfangen, und **dadurch gekennzeichnet, dass** die Teilnehmerstation
   - bei Empfang der Bestätigung innerhalb der Anzahl Subrahmen in einem zweiten Schritt eine Zugriffsnachricht in einer konfigurierbaren Anzahl von Subrahmen in einem physikalischen zufallsgesteuerten Zugriffskanals (PRACH) in Aufwärtsrichtung mit einer aus Informationen der von dem Netzwerk empfangenen Bestätigung bestimmten Sendeleistung zu dem Netzwerk sendet, wobei der aus einer Mehrzahl dem schnellen physikalischen Zugriffskanal (FPACH) zugeordneter physikalischer zufallsgesteuerter Zugriffskanäle (PRACH) gewählte physikalische zufallsgesteuerte Zugriffskanal (PRACH) abhängig von der Subrahmennummer des Empfangs der Bestätigung gewählt wird.

2. Verfahren nach Anspruch 1, bei dem
   die Teilnehmerstation (UE) den Subkanal aus einer für eine Zugriffs-Dienste-Klasse (ASC) verfügbare Anzahl von Subkanälen des physikalischen Kanals in Aufwärtsrichtung (UpPCH) auswählt.

3. Verfahren nach Anspruch 1 oder 2, bei dem
   die Teilnehmerstation (UE) vor einer wiederholten Übertragung der Signatur die Sendeleistung um eine signalisierte Schrittgröße erhöht.

4. Verfahren nach einem vorhergehenden Anspruch, bei dem
   die Teilnehmerstation (UE) eine zeitliche Steuerung der Aussendung der Zugriffsnachricht abhängig von den Informationen der von dem Netzwerk empfangenen Bestätigung bestimmten Zeitgabe durchführt.

5. Verfahren nach einem vorhergehenden Anspruch, bei dem
   das Mobilfunksystem einen TDD-Modus des UMTS-Standards unterstützt.

**Claims**

1. Method for access by user equipment (UE) to a network of a mobile radio system, in which the user equipment (UE)

   - In a first step receives from a Node B (NB) of the network a synchronization code for synchronization, with a number of signatures being able to be derived from the synchronization code used, which are assigned to a physical channel in the uplink direction (UpPCH) for a random access and which each define a subchannel of the physical channel in the uplink direction (UpPCH),
   - Selects at random a subchannel of the physical channel in the uplink direction (UpPCH),
   - In the selected subchannel of the physical channel in the uplink direction (UpPCH) a signature is transmitted to the Node B (NB) with an initial send power,
   - A fast physical access channel (FPACH) in the uplink direction assigned to the physical channel in the uplink direction (UpPCH), listens in for a number of subframes in order to receive an acknowledgement from the network, and **characterized in that** the user equipment
   - On receiving the acknowledgement within the number of subframes, in a second step sends an access message in a configurable number of subframes in a physical random access channel (PRACH) in the uplink direction with a send power determined from the information in the acknowledgement received from the physical random access channels (PRACH) selected from a plurality of physical random access channels assigned to the physical access channel (FPACH) being selected depending on the subframe number of the receipt of the acknowledgment.

2. Method in accordance with claim 1, in which
   the user equipment (UE) selects the subchannel from a number of subchannels of the physical channel in the uplink direction (UpPCH) available for an Access Services Class (ASC).

3. Method in accordance with claim 1 or 2, in which
   the user equipment (UE), before a repeated transmission of the signature, increases the send power by a signalled step amount.

4. Method in accordance with a previous claim, in which the user equipment (UE) controls the timing of the transmission of the access message depending on the timing defined by information in the acknowledgement received from the network.

5. Method in accordance with a previous claim, in which
   the mobile radio system supports a TDD mode of the UMTS standard.

**Revendications**

1. Procédé d'accès d'une station d'abonné (UE) à un réseau d'un système radio mobile, dans lequel la station d'abonné (UE)

   - dans une première étape, reçoit d'une station de base (NB) du réseau un code de synchronisation pour la synchronisation, un nombre de signatures étant dérivable du code de synchronisation utilisé, lesquelles signatures sont affectées à un canal physique dans le sens montant (UpPCH) pour un accès aléatoire et définissent respectivement un sous-canal du canal physique dans le sens montant (UpPCH),
   - sélectionne, de manière commandée aléatoirement, un sous-canal du canal physique dans le sens montant (UpPCH),
   - transmet une signature à la station de base (NB), avec une puissance d'émission initiale, dans le sous-canal sélectionné du canal physique dans le sens montant (UpPCH),
   - écoute, dans le sens descendant, pour un nombre de sous-trames, pour recevoir une confirmation du réseau, un canal d'accès physique rapide (FPACH) affecté au canal physique dans le sens montant (UpPCH),

   et **caractérisé en ce que** la station d'abonné,

   - à la réception de la confirmation, au sein du nombre des sous-trames, dans une deuxième étape, envoie au réseau un message d'accès en un nombre configurable de sous-trames dans un canal d'accès physique à commande aléatoire (PRACH) dans le sens montant avec une puissance d'émission déterminée à partir d'informations de la confirmation reçue du réseau, le canal d'accès physique à commande aléatoire (PRACH) étant choisi en fonction du numéro de sous-trame de la réception de la confirmation à partir d'une pluralité de canaux d'accès physiques à commande aléatoire (PRACH) affectés au canal d'accès physique rapide (FPACH).

2. Procédé selon la revendication 1, dans lequel la station d'abonné (UE) sélectionne le sous-canal à partir d'un nombre de sous-canaux du canal physique, disponible pour une classe de services d'accès (ASC), dans le sens montant (UpPCH).

3. Procédé selon la revendication 1 ou 2, dans lequel la station d'abonné (UE), avant une transmission répétée de la signature, augmente la puissance d'émission d'une grandeur de pas signalée.

4. Procédé selon une revendication précédente, dans lequel la station d'abonné (UE) exécute une commande temporelle de l'émission du message d'accès en fonction du timing déterminé par les informations de la confirmation reçue du réseau.

5. Procédé selon une revendication précédente, dans lequel le système radio mobile assiste un mode TDD du standard UMTS.

# FIG 1

(Stand der Technik)

# FIG 2

Rahmen (10 ms)

| 5 ms | 5 ms |
|---|---|
| Subrahmen1 | Subrahmen2 |

fester Schaltpunkt

| Ts 0 | | | Ts 1 | | Ts 3 | Ts 4 | | Ts 6 |

DwPTS      UpPTS

GP

variabler Schaltpunkt

(Stand der Technik)

EP 1 352 541 B1

# FIG 3

| Subrahmen-nummer | 0 | 1 | 2 | 3 | 4 | 5 | 6 | 7 | 8 | 9 | 10 |
|---|---|---|---|---|---|---|---|---|---|---|---|
| Auf UpPCH sendender Teilnehmer | 1<br>2 | 3<br>4 | 5<br>6 | 7<br>8 | | | | | | | |
| Bestätigter Teilnehmer auf FPACH | | 1 | 2 | 3 | 4 | 5 | 6 | 7 | | | |
| Auf PRACH 0 sendender Teilnehmer | | | | 1 | 2 | 3 | 4 | 5 | 6 | 7 | |

EP 1 352 541 B1

# FIG 4

EP 1 352 541 B1

| Subrahmen-nummer | 0 | 1 | 2 | 3 | 4 | 5 | 6 | 7 | 8 | 9 | 10 |
|---|---|---|---|---|---|---|---|---|---|---|---|
| Auf UpPCH sendender Teilnehmer | 1 2 | 3 4 | 5 6 | 7 8 | | | | | | | |
| Bestätigter Teilenehmer auf FPACH | | 1 | 2 | 3 | 4 | 5 | 6 | 7 | | | |
| Auf PRACH 0 sendender Teilnehmer | | | | | 2 | 2 | 4 | 4 | 6 | 6 | |
| Auf PRACH 1 sendender Teilnehmer | | | | 1 | 1 | 3 | 3 | 5 | 5 | 7 | 7 |

# FIG 5

EP 1 352 541 B1

| Subrahmen-nummer | 0 | 1 | 2 | 3 | 4 | 5 | 6 | 7 | 8 | 9 | 10 | 11 | 12 |
|---|---|---|---|---|---|---|---|---|---|---|---|---|---|
| Auf UpPCH sendender Teilnehmer | 1 2 | 3 4 | 5 6 | 7 8 | | | | | | | | | |
| Bestätigter Teilnehmer auf FPACH | | 1 | 2 | 3 | 4 | 5 | 6 | 7 | | | | | |
| Auf PRACH 0 sendender Teilnehmer | | | | | | | 4 | 4 | 4 | 4 | | | |
| Auf PRACH 1 sendender Teilnehmer | | | | 1 | 1 | 1 | 1 | 5 | 5 | 5 | 5 | | |
| Auf PRACH 2 sendender Teilnehmer | | | | | 2 | 2 | 2 | 2 | 6 | 6 | 6 | 6 | |
| Auf PRACH 3 sendender Teilnehmer | | | | | | 3 | 3 | 3 | 3 | 7 | 7 | 7 | 7 |

# FIG 6

| Subrahmen-nummer | 0 | 1 | 2 | 3 | 4 | 5 | 6 | 7 | 8 | 9 | 10 | 11 | 12 |
|---|---|---|---|---|---|---|---|---|---|---|---|---|---|
| Auf UpPCH sendender Teilnehmer | 1 2 | 3 4 | 5 6 | 7 8 | | | | | | | | | |
| Bestätigter Teilnehmer auf FPACH | X | 1 | | | 2 | 3 | | | X | X | | | |
| Auf PRACH 0 sendender Teilnehmer | | | | | | | 2 | 2 | 2 | 2 | | | |
| Auf PRACH 1 sendender Teilnehmer | | | | 1 | 1 | 1 | 1 | 3 | 3 | 3 | 3 | | |

EP 1 352 541 B1